# EUROPÄISCHE PATENTANMELDUNG

(11) **EP 4 339 119 A2**
(43) Veröffentlichungstag der Anmeldung: **20.03.2024**
(21) Anmeldenummer: 23185513.1
(22) Anmeldetag: 14.07.2023
(51) Int. Cl.: B65D 1/02, B65D 23/02, B65D 23/08, B65D 65/46, B29C 49/24, D21J 7/00

(54) **FASERMATERIAL ZUM HERSTELLEN EINES BEHÄLTERS, VERFAHREN ZUM HERSTELLEN EINES BEHÄLTERS UNTER VERWENDUNG DES FASERMATERIALS UND BEHÄLTER UMFASSEND DAS FASERMATERIAL**

(30) Priorität: 25.08.2022 DE 102022121490
(71) Anmelder: KRONES Aktiengesellschaft, 93073 Neutraubling (DE)
(72) Erfinder: ZACHARIAS, Joerg, Neutraubling (DE); ALBRECHT, Thomas, Neutraubling (DE); WAHL, Matthias, Neutraubling (DE); WINZINGER, Frank, Neutraubling (DE); ENGELHARD, Patrick, Neutraubling (DE); NEUBAUER, Michael, Neutraubling (DE); GROSSER, Angelika, Neutraubling (DE); FREESE, Yvette, Neutraubling (DE)
(74) Vertreter: Grünecker Patent- und Rechtsanwälte PartG mbB

(57) **Zusammenfassung**

Die Erfindung betrifft ein Fasermaterial zum Herstellen eines Behälters, wobei das Fasermaterial Faserstrukturen (1, 3, 5, 7, 9) umfasst zum Gewährleisten einer vorgegebenen Stabilität eines aus dem Fasermaterial hergestellten Behälters (11). Weiter betrifft die Erfindung ein Verfahren zum Herstellen eines Behälters (11) unter Verwendung des Fasermaterials und einen Behälter umfassend das Fasermaterial.

## Beschreibung

Die Erfindung betrifft ein Fasermaterial zum Herstellen eines Behälters, ein Verfahren zum Herstellen eines Behälters und einen Behälter umfassend das Fasermaterial gemäß den unabhängigen Ansprüchen.

### Stand der Technik

Für eine Herstellung von Fasern umfassenden Flaschen, wie beispielsweise Pulpeflaschen, ist das Ausgangsmaterial eine fluide Masse, die Wasser und Fasern, wie Holz- und/oder Zellulosefasern, umfasst. Die Fasern zeichnen sich dabei im Allgemeinen durch keine besondere Struktur oder Form aus. So können zwar flächige Körper und Flaschen aus der fluiden Masse hergestellt werden, die aber keine besondere Steifigkeit durch die Faserstruktur der Fasern in der fluiden Masse aufweisen. Es kann daher vorkommen, dass Flaschen keine notwendige Stabilität hinsichtlich beispielsweise Bersten, Topload beim Stapeln oder bei der normalen Handhabung durch einen Endverbraucher aufweisen.

### Aufgabe

Die Aufgabe der Erfindung ist es, ein Fasermaterial zum Herstellen eines Behälters, ein Verfahren zum Herstellen eines Behälters und einen Behälter umfassend das Fasermaterial zur Verfügung zu stellen, die ein Herstellen Behälters ermöglichen, der eine ausreichende Festigkeit und Stabilität aufweist.

### Lösung

Die Aufgabe wird gelöst durch das Fasermaterial zum Herstellen eines Behälters, das Verfahren zum Herstellen eines Behälters und den Behälter umfassend das Fasermaterial gemäß den unabhängigen Ansprüchen. Weitere Ausführungsformen sind in den Unteransprüchen offenbart.

Das erfindungsgemäße Fasermaterial zum Herstellen eines Behälters, wobei das Fasermaterial Faserstrukturen umfasst zum Gewährleisten einer vorgegebenen Stabilität eines aus dem Fasermaterial hergestellten Behälters.

Durch die Faserstrukturen können erforderliche Eigenschaften für einen herzustellenden Behälter erreicht werden.

Die Faserstrukturen können Viskosefasern umfassen. Eine Viskosefaser ist eine künstliche Faser aus regenerierter Zellulose, wobei die Viskosefasern als Ausgangsbasis 100% Zellulose haben, die in einem mehrstufigen Verfahren behandelt wird.

Die Faserstrukturen können eine trilobale Form oder eine doppelt trilobale Form umfassen. Eine trilobale Form umfasst einen Y-förmigen Querschnitt und eine doppelt trilobale Form umfasst einen doppelten Y-Querschnitt. Durch die trilobale oder doppelt trilobale Struktur können die Fasern biegesteif sein.

Die Faserstrukturen können eine flächige Struktur umfassen. Durch eine Überlappung mehrerer solcher Faserstrukturen kann die Reißfestigkeit erhöht werden.

Die Faserstrukturen können eine hohle Struktur umfassen. Durch die hohle Struktur können die Faserstrukturen leicht sein und dabei trotzdem versteifend wirken.

Die Faserstrukturen können eine geriffelte oder raue äußere Oberfläche umfassen. Durch die geriffelte oder raue Oberfläche kann es zu einer Verzahnung der Faserstrukturen und zu einer Erhöhung der Reißfestigkeit und der Stabilität kommen.

Die Faserstrukturen können eine vorgegebene Faserlängenverteilung von Fasern umfassen.

Die Fasern der Faserstrukturen können Lignin, Bananenblätter, Chinin, Glasfasern, Metallfäden und/oder Operationsfäden umfassen. Die Fasern können beispielsweise Fasern von Nadelhölzern, Blattgehölzen und/oder Platanen und/oder von Gräsern, Schilf und/oder Bambus oder dergleichen umfassen. Lignin kann eine stützende Wirkung auf den Zellstoff haben und kann auch für transparente Anwendungen geeignet sein. Bananenblätter können für größere Behälter, wie beispielsweise Ein-Weg-Geschirr, geeignet sein. Durch ein Einbetten von Glasfasern, Metallfäden und/oder Operationsfäden kann eine Verbesserung der Festigkeit erreicht werden.

Die Fasern können Seidenfäden, Spinnenfäden, Algen, natürliche Fasern (wie Donau-Silphie-Fasern, Hanf, Mais, Baumwolle, Stroh, Brennnessel, Weizen, Sisal, Kenaf, Abaca), Bananenschalen, Orangenschalen, Gras, Stroh, Kartoffelstärke oder aufbereiteten Kuhdung umfassen. Auch können Zellstofffasern vorgesehen sein, die einem Prozess entstammen, durch den sie künstlich gezüchtet wurden. Diese alternativen Materialien können bei Materialengpässen von Holz als Grundstoff für eine fluide Masse mit Fasern, den Grundstoff vollständig oder teilweise ersetzen.

Die Fasern können Virgin-Fasern oder recycelte Fasern sein oder umfassen. Es kann vorgesehen sein, dass nur Virgin-Fasern, dass nur recycelte Fasern oder dass eine Mischung aus Virgin-Fasern und recycelten Fasern verwendet werden kann.

Durch den natürlichen Ursprung der Fasern können diese biologisch abbaubar sein. Zudem sind sie nachhaltig und nachwachsend und/oder können recycelt und wiederverwendet werden.

Die Faserstrukturen können eine Gewebestruktur oder eine Mischung aus verschiedenen Geweben und/oder Zellulosen und/oder Holzfasern umfassen.

Die Faserstrukturen können zu einer Fliesstruktur verarbeitet werden, die dann verwendet werden kann. Anstatt der Fliesstruktur kann auch ein verwobener, gestrickter oder gehäkelter, flächiger Stoff aus den Faserstrukturen erstellt und verwendet werden. Die Fliesstruktur oder der flächige Stoff können in eine Form zum Herstellen des Behälters eingebracht und dann mit einer fluiden Masse, die Fasern und/oder Faserstrukturen umfasst, versetzt werden.

Die Faserstrukturen können Fasermischungen aus holzfremden Material, beispielsweise Baumwolle, und/oder Textilfasern umfassen, die beispielsweise Barriereeigenschaften umfassen, und/oder Krepppapierschlauch und/oder Strickschlauch und/oder Baumwollnetz und/oder Hanf.

Im Fasermaterial können die zuvor erwähnten Faserstrukturen auch in Kombination verwendet werden. Beispielsweise können Faserstrukturen mit unterschiedlichen äußeren Oberflächen und/oder Formen und/oder hohler Struktur und/oder flächiger Struktur und/oder aus verschiedenen Materialien kombiniert werden. Dabei können zwei, drei, vier oder mehr unterschiedliche Faserstrukturen in dem Fasermaterial kombiniert werden.

Für das Herstellen einer faserhaltigen, fluiden Masse, die beispielsweise für ein Verfahren zum Herstellen eines Behälters benötigt werden kann, kann eine Art der Faserstrukturen oder zwei oder mehr verschiedene Arten der Faserstrukturen in ein Fluid, beispielsweise Wasser, eingebracht werden.

Das Fasermaterial kann für eine Preform eines daraus herzustellenden Behälters verwendbar sein. Eine solche Preform kann für einen Herstellungsprozess des Behälters in eine Behälter-Streckblasmaschine eingebracht werden. Die Streckblasmaschine kann die Preform mittels Zufuhr von Heißluft, wobei die Heißluft beispielsweise eine Temperatur von 60°C bis 250°C aufweisen kann, und/oder von Wasserdampf, wobei der Wasserdampf beispielsweise eine Temperatur von 100°C bis 300°C aufweisen kann, in eine vorgegebene Behälterform bringen. Die Preform kann derart ausgebildet sein, dass bei einem Herstellungsprozess des Behälters in der Streckblasmaschine eine gleichmäßig Wanddicke erhalten werden kann. Die Bereichsgrenzen können jeweils miteingeschlossen sein.

Das Fasermaterial, das für eine Preform eines daraus herzustellenden Behälters verwendbar sein kann, kann Faserstrukturen natürlichen Ursprungs umfassen. Beispielsweise kann eine Art oder mehrere verschiedene Arten von Faserstrukturen vorgesehen sein. Die Faserstrukturen können Primär- und/oder Sekundärfasern sein oder umfassen, beispielsweise von Birke, Kiefer, Gras und/oder Hanf. Zudem kann das Fasermaterial anorganische Füllstoffe, wie beispielsweise Kreide und/oder Kaolin, und/oder organische Füllstoffe, wie beispielsweise mikrofibrillierte Cellulose (MFC), Flohsamenschalen, Stärke und/odermodifizierte Stärke, umfassen. Zudem oder alternativ kann das Fasermaterial biobasierte Bindemittel umfassen, wie beispielsweise Celluloseether, Carboxymethylcellulose, Stärkeether, Xanthan, Guar, Pektine, Agar, Gelatine und/oder Gummi Arabicum. Zudem oder alternativ kann das Fasermaterial biobasierte Additive umfassen, wie beispielsweise Sonnenblumenlecithin. Zudem oder alternativ kann das Fasermaterial Farbmittel umfassen. Die Farbmittel können biobasiert sein.

Das Fasermaterial kann 0% bis 100% von Langfaserzellstoff, 0% bis 100% von Kurzfaserzellstoff, 0% bis 100% von Altpapierfasern, 0% bis 100% von Einjahrspflanzenzellstoff und/oder 0% bis 100% Baumwollfasern umfassen. Die jeweiligen oberen Bereichsgrenzen von 100% können miteingeschlossen sein. Beispielsweise können die Fasern des Langfaserzellstoffs eine Länge von mehr als 1 cm aufweisen. Beispielsweise können die Fasern des Kurzfaserzellstoffs eine Länge von 1 mm bis 8 mm aufweisen. Für das Herstellen eine faserhaltige, fluiden Masse, die beispielsweise für ein Verfahren zum Herstellen einer Preform des daraus herzustellenden Behälters verwendet werden kann, kann eine Mischung aus dem Fasermaterial mit einem Fluid, beispielsweise Wasser, in einem Massenverhältnis von 99:1 bis 1:99 vorgesehen sein. Die Bereichsgrenzen können miteingeschlossen sein.

Ein Verfahren zum Herstellen eines Behälters unter Verwendung des Fasermaterials, wie weiter oben oder weiter unten beschrieben, ist vorgesehen.

Das Verfahren umfasst ein Einbringen des Fasermaterials in eine Form, ein Pressen des Fasermaterials in der Form und ein Herstellen des Behälters.

Das Fasermaterial kann zum Einbringen in die Form als eine faserhaltige, fluide Masse vorliegen. Die faserhaltige, fluide Masse kann Pulpe sein oder umfassen. Der fluide Anteil der Masse kann Wasser umfassen.

Alternativ kann das Verfahren ein Einbringen einer ersten Schicht des Fasermaterials in eine Form zum Ausbilden einer äußeren Oberfläche des Behälters, ein Einbringen einer zweiten Schicht des Fasermaterials, das steril ist, in die Form auf die erste Schicht zum Ausbilden einer inneren Oberfläche des Behälters, ein Pressen der ersten und der zweiten Schicht in der Form und ein Herstellen des Behälters umfassen.

Das Fasermaterial für die zweite Schicht kann für das Verfahren bereits steril zur Verfügung gestellt werden, beispielsweise durch das Vorsehen von Silberionen, oder das Fasermaterial für die zweite Schicht kann vor dem Einbringen sterilisiert werden.

Für die zweite Schicht kann statt des sterilen Fasermaterials auch ein erstmals verwendetes Fasermaterial, das beispielsweise nicht steril sein kann oder das beispielsweise steril sein kann oder vor dem Einbringen sterilisiert werden kann, und statt der ersten Schicht ein recyceltes Fasermaterial verwendet werden.

Es kann auch vorgesehen sein, dass nach Einbringen einer ersten Schicht des Fasermaterials in eine Form zum Ausbilden einer äußeren Oberfläche des Behälters eine Faserstruktur in Form eines Netzes, beispielsweise ein Baumwollstoff, auf der ersten Schicht angeordnet wird und danach eine zweite Schicht des Fasermaterials in die Form auf das Netz aufgebracht wird zum Ausbilden einer inneren Oberfläche des Behälters.

Für die zweite Schicht kann ein steriles Fasermaterial oder ein erstmals verwendetes Fasermaterial und für die erste Schicht ein recyceltes oder nicht-steriles Fasermaterial verwendet werden. Für die erste und die zweite Schicht kann auch das gleiche Fasermaterial verwendet werden.

Das Verfahren kann weiter ein Sterilisieren des Fasermaterials für die zweite Schicht vor dem Einbringen umfassen.

Alternativ kann Verfahren zum Herstellen eines Behälters unter Verwendung des Fasermaterials, wie weiter oben oder weiter unten beschrieben, ein Herstellen einer Preform aus dem Fasermaterial, ein Einbringen der Preform in eine Streckblasmaschine und ein Ausformen des Behälters in der Streckblasmaschine umfassen. Für das Fasermaterial kann das Fasermaterial vorgesehen sein, das weiter oben oder weiter unten im Zusammenhang eine Preform eines daraus herzustellenden Behälters erwähnt wurde.

Das Ausformen des Behälters in der Streckblasmaschine kann ein Zuführen von Heißluft, beispielsweise mit einer Temperatur von 60°C bis 250°C, und/oder ein Zuführen von Wasserdampf, beispielsweise mit einer Temperatur von 100°C bis 300°C, umfassen.

Weiter ist ein Behälter umfassend das Fasermaterial, wie weiter oben oder weiter unten beschrieben, vorgesehen. Der Behälter kann mittels des zuvor beschriebenen Verfahrens hergestellt werden bzw. hergestellt worden sein.

### Kurze Figurenbeschreibung

Die beigefügten Figuren stellen beispielhaft zum besseren Verständnis und zur Veranschaulichung Aspekte und/oder Ausführungsbeispiele der Erfindung dar. Es zeigt:
Figur 1 Faserstrukturen mit einer trilobalen Form,
Figur 2 Faserstrukturen mit einer flächigen Struktur,
Figur 3 Faserstrukturen mit einer hohlen Struktur,
Figur 4 Faserstrukturen mit einer rauen Oberfläche,
Figur 5 Faserstrukturen mit einer geriffelten Oberfläche und
Figur 6 einen zweischichtigen Behälter.

### Ausführliche Figurenbeschreibung

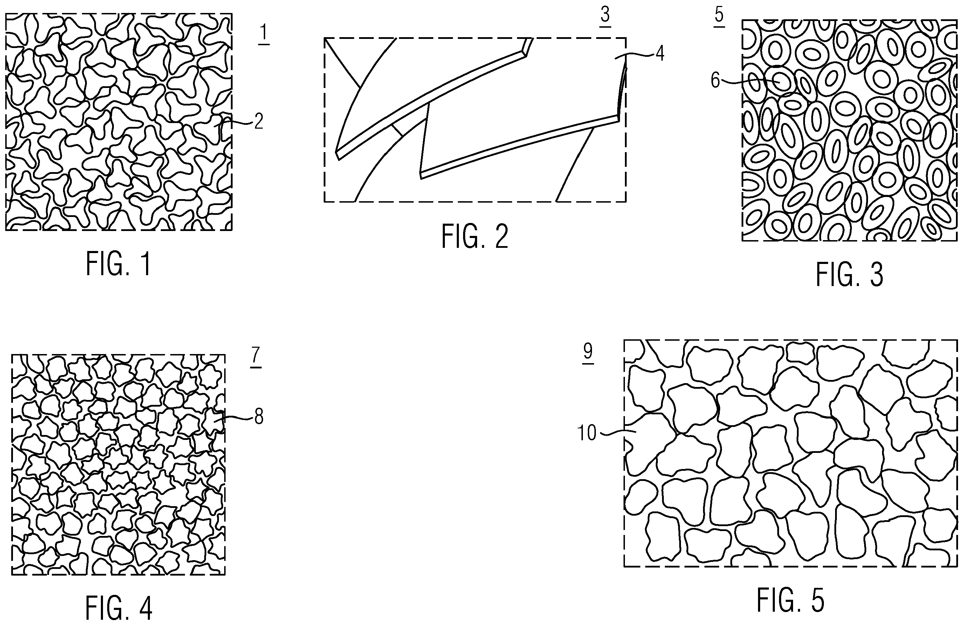

Die Figuren 1 bis 5 zeigen verschiedene Faserstrukturen, die in einem Fasermaterial zum Herstellen eines Behälters verwendet werden können zum Gewährleisten einer vorgegebenen Stabilität des hergestellten Behälters.

Die Figur 1 zeigt Faserstrukturen 1 mit einer trilobalen Form 2. Durch die trilobale Struktur können die Fasern biegesteif sein und eine verbesserte Festigkeit und/oder Stabilität eines Behälters bedingen, der diese umfasst.

Die Figur 2 zeugt Faserstrukturen 3 mit einer flächigen Struktur 4. Durch eine Überlappung mehrerer solcher Faserstrukturen 3 kann die Reißfestigkeit erhöht werden und somit kann beispielsweise eine verbesserte Festigkeit und/oder Stabilität eines Behälters bedingt werden, der Faserstrukturen 3 umfasst.

Die Figur 3 zeigt Faserstrukturen 5 mit einer hohlen Struktur 6. Durch die hohle Struktur 6 können die Faserstrukturen 5 und dem entsprechend ein Behälter, der sie umfasst, leicht sein. Da die hohle Struktur 6 versteifend wirken kann, können trotzdem eine verbesserte Festigkeit und/oder Stabilität des Behälters bedingt werden.

Die Figur 4 zeigt Faserstrukturen 7 mit einer rauen Oberfläche 8. Durch raue Oberfläche 8 kann es zu einer Verzahnung der Faserstrukturen 7 und zu einer Erhöhung der Reißfestigkeit und der Stabilität eines Behälters kommen, der die Faserstrukturen 7 umfasst.

Die Figur 5 zeigt Faserstrukturen 9 mit einer geriffelten Oberfläche 10. Durch die geriffelte Oberfläche 10 kann es zu einer Verzahnung der Faserstrukturen 9 und zu einer Erhöhung der Reißfestigkeit und der Stabilität kommen eines Behälters kommen, der die Faserstrukturen 9 umfasst.

Für das Herstellen einer faserhaltigen, fluiden Masse kann eine Art der Faserstrukturen oder zwei oder mehr verschiedene Arten der Faserstrukturen in ein Fluid, beispielsweise Wasser, eingebracht werden.

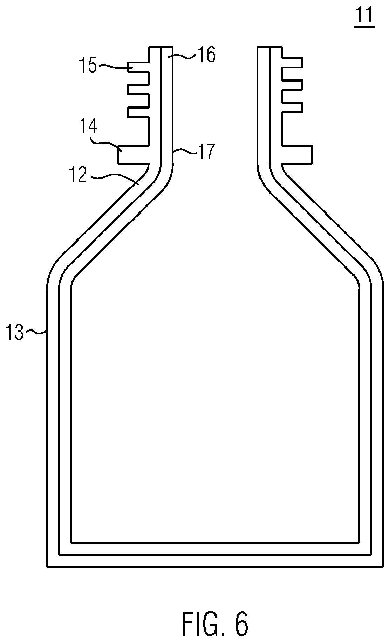

Die Figur 6 zeigt einen zweischichtigen Behälter 11. Der Behälter 11 umfasst eine erste Schicht 12, die eine äußere Oberfläche 13 des Behälters ausbildet und auch ein Gewinde 15 und einen Tragring 14 umfasst. Eine zweite Schicht 16 ist im Innern des Behälter 11 auf die erste Schicht 12 aufgebracht und bildet eine innere Oberfläche 17 des Behälters 11 aus.

Für die erste Schicht 12 kann ein Fasermaterial verwendet werden, das recycelt wurde oder das nicht steril ist oder nicht sterilisiert wurde. Die erste Schicht 12 kommt nicht in Kontakt mit einem in den Behälter 11 eingefülltem Produkt.

Die zweite Schicht 16 kann ein Fasermaterial umfassen, das erstmal verwendet wird und/oder das steril ist oder vor dem Einbringen sterilisiert wurde. Die innere Oberfläche 17 des Behälters 11 kann zumindest teilweise in Kontakt mit einem in den Behälter 11 eingefüllten Produkt kommen.

Für die Herstellung des Behälters 11 kann die erste Schicht 12 des Fasermaterials in eine Form zum Ausbilden der äußeren Oberfläche 13 des Behälters eingebracht werden. Die zweite Schicht 16 des Fasermaterials kann in die Form auf die erste Schicht 12 zum Ausbilden der inneren Oberfläche 17 des Behälters 11 aufgebracht werden. Das Fasermaterial der ersten Schicht 12 und der zweiten Schicht 16 kann dabei zum Einbringen in die Form jeweils als eine faserhaltige, fluide Masse vorliegen. Nach dem Einbringen der beiden Schichten 12, 16 in die Form kann ein Pressen der Schichten 12, 16 in der Form und ein Herstellen des Behälters 11 erfolgen. Durch das Pressen kann zumindest ein Anteil des Fluids aus der faserhaltige, fluide Masse herausgepresst werden.

## Patentansprüche

1. Fasermaterial zum Herstellen eines Behälters, wobei das Fasermaterial Faserstrukturen (1, 3, 5, 7, 9) umfasst zum Gewährleisten einer vorgegebenen Stabilität eines aus dem Fasermaterial hergestellten Behälters (11).

2. Das Fasermaterial nach Anspruch 1, wobei die Faserstrukturen (1, 3, 5, 7, 9) mindestens eines der folgenden Merkmale umfassen:
- Viskosefasern,
- eine trilobale Form (2) oder eine doppelt trilobale Form,
- eine flächige Struktur (4),
- eine hohle Struktur (6),
- eine geriffelte (10) oder raue (8) äußere Oberfläche,
- eine vorgegebene Faserlängenverteilung von Fasern.

3. Das Fasermaterial nach einem der Ansprüche 1 bis 2, wobei Fasern der Faserstrukturen (1, 3, 5, 7, 9) umfassen:
Lignin, Bananenblätter, Chinin, Glasfasern, Metallfäden und/oder Operationsfäden.

4. Das Fasermaterial nach einem der Ansprüche 1 bis 3, wobei die Faserstrukturen (1, 3, 5, 7, 9) umfassen:
eine Gewebestruktur oder eine Mischung aus verschiedenen Geweben und/oder Zellulosen und/oder Holzfasern.

5. Das Fasermaterial nach Anspruch 4, wobei die Faserstrukturen (1, 3, 5, 7, 9) umfassen:
Fasermischungen aus holzfremdem Material, beispielsweise Baumwolle, und/oder Textilfasern, die beispielsweise Barriereeigenschaften umfassen, und/oder Krepppapierschlauch und/oder Strickschlauch und/oder Baumwollnetz und/oder Hanf.

6. Das Fasermaterial nach einem der Ansprüche 1 bis 5, wobei das Fasermaterial mindestens eines der folgenden Merkmale umfasst:
- das Fasermaterial ist für eine Preform eines daraus herzustellenden Behälters verwendbar,
- das Fasermaterial umfasst Faserstrukturen natürlichen Ursprungs, wobei beispielsweise eine Art oder mehrere verschiedene Arten von Faserstrukturen vorgesehen sind, wobei beispielsweise die Faserstrukturen Primär- und/oder Sekundärfasern sind oder umfassen, beispielsweise von Birke, Kiefer, Gras und/oder Hanf,
- das Fasermaterial umfasst anorganische Füllstoffe, wie beispielsweise Kreide und/oder Kaolin, und/oder organische Füllstoffe, wie beispielsweise mikrofibrillierte Cellulose (MFC), Flohsamenschalen, Stärke und/odermodifizierte Stärke,
- das Fasermaterial umfasst biobasierte Bindemittel, wie beispielsweise Celluloseether, Carboxymethylcellulose, Stärkeether, Xanthan, Guar, Pektine, Agar, Gelatine und/oder Gummi Arabicum,
- das Fasermaterial umfasst biobasierte Additive, wie beispielsweise Sonnenblumenlecithin,
- das Fasermaterial umfasst Farbmittel, wobei beispielsweise die Farbmittel biobasiert sind.

7. Das Fasermaterial nach Anspruch 6, wobei das Fasermaterial 0% bis 100% von Langfaserzellstoff, 0% bis 100% von Kurzfaserzellstoff, 0% bis 100% von Altpapierfasern, 0% bis 100% von Einjahrspflanzenzellstoff und/oder 0% bis 100% Baumwollfasern umfasst.

8. Verfahren zum Herstellen eines Behälters (11) unter Verwendung des Fasermaterials nach einem der Ansprüche 1 bis 7.

9. Das Verfahren nach Anspruch 8, umfassend:
- Einbringen des Fasermaterials in eine Form,
- Pressen des Fasermaterials in der Form und
- Herstellen des Behälters.

10. Das Verfahren nach Anspruch 8, umfassend:
- Einbringen einer ersten Schicht (12) des Fasermaterials in eine Form zum Ausbilden einer äußeren Oberfläche (13) des Behälters (11),
- Einbringen einer zweiten Schicht (16) des Fasermaterials, das steril ist, in die Form auf die erste Schicht (12) zum Ausbilden einer inneren Oberfläche (17) des Behälters (11),
- Pressen der ersten und der zweiten Schicht in der Form und
- Herstellen des Behälters (11).

11. Das Verfahren nach Anspruch 10, weiter umfassend Sterilisieren des Fasermaterials für die zweite Schicht (16) vor dem Einbringen.

12. Das Verfahren nach Anspruch 8, wobei das Verfahren weiter umfasst:
Herstellen einer Preform aus einem Fasermaterial nach Anspruch 6 oder 7,
Einbringen der Preform in eine Streckblasmaschine und
Ausformen des Behälters in der Streckblasmaschine.

13. Das Verfahren nach Anspruch 12, wobei das Ausformen des Behälters in der Streckblasmaschine ein Zuführen von Heißluft, beispielsweise mit einer Temperatur von 60°C bis 250°C, und/oder ein Zuführen von Wasserdampf, beispielsweise mit einer Temperatur von 100°C bis 300°C, umfasst.

14. Behälter (11) umfassend das Fasermaterial nach einem der Ansprüche 1 bis 7.

15. Behälter nach Anspruch 14, wobei der Behälter mittels des Verfahrens nach einem der Ansprüche 8 bis 13 hergestellt wurde.
